# EUROPEAN PATENT SPECIFICATION

(11) **EP 2 311 697 B1**
(45) Date of publication and mention of the grant of the patent: **20.06.2012**
(21) Application number: 10188027.6
(22) Date of filing: 19.10.2010
(51) Int. Cl.: B60T 8/17, B60T 8/26, B60T 8/32, B62L 3/02, B62L 3/08, B60T 8/34, B60T 8/42

(54) **Brake hydraulic pressure control device for handlebar vehicle**
Vorrichtung zur Steuerung des hydraulischen Bremsdruckes für ein Fahrzeug mit Lenker
Dispositif de contrôle de pression hydraulique de frein pour véhicule à guidon

(30) Priority: 19.10.2009 JP 2009240764; 29.01.2010 JP 2010019567
(43) Date of publication of application: 20.04.2011
(73) Proprietor: Nissin Kogyo Co., Ltd., Ueda-shi Nagano-ken 386-8505 (JP)
(72) Inventor: Hasegawa, Tetsuya c/o Nissin Kogyo Co., Ltd., Nagano (JP)
(74) Representative: HOFFMANN EITLE

(56) References cited:
- EP-A1- 1 652 745
- EP-A1- 1 839 978
- EP-A1- 1 839 981
- EP-A1- 1 842 755
- EP-A2- 1 277 635

## Description

### BACKGROUND

### 1. Field of the Invention

The present invention relates to a brake hydraulic pressure control device for a handlebar vehicle.

### 2. Description of the Related Art

A brake hydraulic pressure control device mainly used for handlebar type vehicles (hereinafter simply referred to as "handlebar vehicles"), such as a motorcycle, a motor tricycle, and an all-terrain vehicle (ATV), includes a base formed with brake fluid passages which connect a master cylinder and the wheel cylinder of a wheel brake, and a control unit attached to this base. Also, anti-lock brake control of the wheel cylinder is allowed as the control unit appropriately controls the brake hydraulic pressure to be input to the wheel cylinder.

In the aforementioned brake hydraulic pressure control device, in the anti-lock brake control, when it is determined that the brake hydraulic pressure to be input to the wheel cylinder should be increased, an inlet valve provided at the base is opened, and the brake hydraulic pressure of the wheel cylinder is increased on the basis of the differential pressure between the brake hydraulic pressure of the master cylinder, and the brake hydraulic pressure of the wheel cylinder.

Among such conventional brake hydraulic pressure control devices, there is one including an electromagnetic pressure reducing valve which reduces the brake hydraulic pressure to be input to the base from the master cylinder when excessive brake hydraulic pressure has been generated in the master cylinder (for example, refer to JP-A-2002-283989).

In this configuration, when excessive brake hydraulic pressure has been generated in the master cylinder, as the control unit closes the pressure reducing valve, the excessive brake hydraulic pressure can be prevented from being input to the base.

In the brake hydraulic pressure control device described in the aforementioned JP-A-2002-283989, the pressure reducing valve is assembled into a hydraulic pressure circuit within the base. When the pressure reducing valve is provided inside the base in this way, there is a problem in that the internal structure of the base becomes complicated. A similar brake control device is also disclosed in the EP 1 839 978 A1.

### SUMMARY

In order to solve the aforementioned problem, the invention aims at providing a brake hydraulic pressure control device for a handlebar vehicle which can increase the degree of freedom in the layout of the pressure reducing valve.

In order to solve the above problems, the invention provides a brake hydraulic pressure control device for a handlebar vehicle configured to perform anti-lock brake control. The device includes a base formed with brake fluid passages, and a pressure reducing valve provided at a brake line which connects a master cylinder and the base together to reduce the rate of increase of the brake hydraulic pressure to be input to the base with respect to the rate of increase of the brake hydraulic pressure generated in the master cylinder as a valve body operates due to the differential hydraulic pressure between the brake hydraulic pressure on the side of the master cylinder and the brake hydraulic pressure on the side of the base.

In this configuration, the pressure reducing valve is provided at the brake line which connects the master cylinder and the base together, so that the degree of freedom in the layout of the pressure reducing valve becomes high, and the pressure reducing valve can be provided in the brake system without changing the internal structure of the base. Also, since the rate of increase of the brake hydraulic pressure to be input to the base is reduced with respect to the rate of increase of the brake hydraulic pressure generated in the master cylinder, the stability of the brake control can be enhanced.

Additionally, the mechanical pressure reducing valve in which the valve body operates due to the differential hydraulic pressure of the brake hydraulic pressure on the side of a master cylinder and the brake hydraulic pressure on the side of the base is used and it is not necessary to control the pressure reducing valve electrically. Therefore, the brake control can be simplified.

Additionally, since electric connection to the pressure reducing valve becomes unnecessary, the degree of freedom in the layout of the pressure reducing valve increases. Accordingly, the pressure reducing valve can be arranged external to the base, and the base can be miniaturized.

The aforementioned brake hydraulic pressure control device for a handlebar vehicle can be configured so as to further include a front wheel brake system corresponding to the wheel cylinder of a front wheel and a rear wheel brake system corresponding to the wheel cylinder of a rear wheel. Here, the pressure reducing valve can be provided at the brake line which connects the master cylinder and the base together in at least one of the front wheel brake system and the rear wheel brake system. The aforementioned pressure reducing valve of the invention is easily incorporated into a front wheel brake system and a rear wheel brake system since an electric connection is unnecessary and the degree of freedom in the layout is high.

In the aforementioned brake hydraulic pressure control device for a handlebar vehicle, preferably, the pressure reducing valve is arranged in a space formed between one face of the base, and a brake line extending along the one face of the base from the base. If the pressure reducing valve is arranged in the dead space formed between the one face of the base and the brake line, the space inside a vehicle can be effectively utilized.

In order to solve the above problem, as another configuration, of the invention, there is provided a brake hydraulic pressure control device for a handlebar vehicle including a front wheel brake system corresponding to the wheel cylinder of a front wheel, and a rear wheel brake system corresponding to the wheel cylinder of a rear wheel, and configured to perform anti-lock brake control of at least one of the front wheel brake system and the rear wheel brake system. The brake hydraulic pressure control device includes a base formed with brake fluid passages, and a pressure reducing valve which reduces the rate of increase of the brake hydraulic pressure to be input to the base with respect to the rate of increase of the brake hydraulic pressure generated in the master cylinder, wherein the pressure reducing valve and the base are provided at the brake line which connects the master cylinder and the base together in at least one of the front wheel brake system and the rear wheel brake system.

In this configuration, the pressure reducing valve is provided at the brake line which connects the master cylinder and the base together, so that the degree of freedom in the layout of the pressure reducing valve becomes high, and the pressure reducing valve can be provided at the brake system without changing the internal structure of the base. Also, since the rate of increase of the brake hydraulic pressure to be input to the base is reduced with respect to the rate of increase of the brake hydraulic pressure generated in the master cylinder, the stability of the brake control can be enhanced.

Additionally, the pressure reducing valve can be arranged so that the front wheel brake system and the rear wheel brake system are individually controlled, and the accuracy of the brake control can be enhanced.

In the aforementioned brake hydraulic pressure control device for a handlebar vehicle, a master-cylinder-side hydraulic pressure absorbing mechanism which absorbs the brake hydraulic pressure within a brake fluid passage on the side of the master cylinder can be provided at the brake fluid passage closer to the master cylinder than a seating position of a valve body of the pressure reducing valve. The master-cylinder-side hydraulic pressure absorbing mechanism is configured so as to operate when the brake hydraulic pressure within the brake fluid passage on the side of the master cylinder becomes equal to or greater than the operation start hydraulic pressure of the pressure reducing valve.

Here, when the pressure reducing valve operates, the reaction force against the operation of a brake operation member increases compared with when the pressure reducing valve is not provided due to the rise in the brake hydraulic pressure within the brake fluid passage closer to the master cylinder than the seating position of the valve body.

In the aforementioned configuration, when the brake hydraulic pressure within the brake fluid passage on the side of the master cylinder becomes equal to or greater than the operation start hydraulic pressure of the pressure reducing valve, the brake hydraulic pressure within the brake fluid passage on the side of the master cylinder is reduced by the master-cylinder-side hydraulic pressure absorbing mechanism. Therefore, a sudden increase in reaction force against the operation of the brake operation member can be eased. That is, a change in the operation feel of the brake operation member caused by the operation of the pressure reducing valve can be reduced, and a favorable operation feel can be obtained.

Additionally, the master-cylinder-side hydraulic pressure absorbing mechanism operates when the brake hydraulic pressure within the brake fluid passage on the side of the master cylinder becomes equal to or greater than the operation start hydraulic pressure of the pressure reducing valve. Therefore, the brake hydraulic pressure within the brake fluid passage on the side of the master cylinder can be prevented from being reduced more than needed, at the time of the brake operation in which the pressure reducing valve is not operating.

In the aforementioned brake hydraulic pressure control device for a handlebar vehicle, the master-cylinder-side hydraulic pressure absorbing mechanism can include a mounting hole formed with a communication port which leads to the brake fluid passage on the side of the master cylinder, a piston inserted into the mounting hole, and a biasing member which biases the piston toward the communication port. When the brake hydraulic pressure within the brake fluid passage on the side of the master cylinder has reached the operation start hydraulic pressure of the pressure reducing valve, an initial load can be imparted to the biasing member so that the piston moves in a direction away from the communication port against the elastic force of the biasing member.

In this configuration, when the brake hydraulic pressure within the brake fluid passage on the side of the master cylinder has reached the operation start hydraulic pressure of the pressure reducing valve, the brake hydraulic pressure within the brake fluid passage on the side of the master cylinder begins to be reduced. Therefore, a favorable operation feel can be obtained without causing a feeling of difference from the operation feel of the brake operation member when the pressure reducing valve starts.

In addition, in the aforementioned configuration, it is preferable to eliminate any unpleasant sensation from the operation feel of the conventional brake operation member by setting the variation (the amount of contraction) from the start of deflection of the biasing member so that the reaction force against the operation of the brake operation member is approximated to the operation reaction force when the pressure reducing valve is not provided.

In the aforementioned brake hydraulic pressure control device for a handlebar vehicle, a pump-side hydraulic pressure absorbing mechanism which absorbs the brake hydraulic pressure within a brake fluid passage on the side of a pump can be provided at a brake fluid passage which connects the seating position of a valve body of the pressure reducing valve and the discharge side of the pump provided at the base. The pump-side hydraulic pressure absorbing mechanism is configured so as to operate when the brake hydraulic pressure within the brake fluid passage on the side of the pump becomes equal to or greater than the operation start hydraulic pressure of the anti-lock brake control.

In this configuration, in the anti-lock brake control, the pump-side hydraulic pressure absorbing mechanism can be made to absorb the pulsation of the brake fluid discharged from the pump when the brake fluid within a reservoir is made to flow back to the input side of the base by the pump.

Additionally, since the brake hydraulic pressure within the brake fluid passage closer to the pump than the seating position of the valve body is reduced by the pump-side hydraulic pressure absorbing mechanism and the rise in the brake hydraulic pressure is suppressed on the input side of the base, the brake fluid in the reservoir is easily made to flow back to the input side of the base, and the pump can be miniaturized.

Additionally, the pump-side hydraulic pressure absorbing mechanism operates when the brake hydraulic pressure within the brake fluid passage on the side of the pump becomes equal to or greater than the operation start hydraulic pressure of anti-lock brake control. Therefore, the brake hydraulic pressure within the brake fluid passage on the side of the pump can be prevented from being absorbed by the pump-side hydraulic pressure absorbing mechanism, at the time of normal brake operation.

In addition, the operation start hydraulic pressure of the anti-lock brake control is a brake hydraulic pressure which assumes that the wheels may lock on a dry road surface or the rear wheel may left. That is, the operation start hydraulic pressure is a brake hydraulic pressure which assumes that the anti-lock brake control is started by the control unit under dry road surface conditions. The concrete numerical value of this operation start hydraulic pressure is appropriately set according to various kinds of vehicles.

In the aforementioned brake hydraulic pressure control device for a handlebar vehicle, the pump-side hydraulic pressure absorbing mechanism can include a mounting hole formed with a communication port which leads to the brake fluid passage on the side of the pump, a piston inserted into the mounting hole, and a biasing member which biases the piston toward the communication port. When the brake hydraulic pressure within the brake fluid passage on the side of the pump has reached the operation start hydraulic pressure of the anti-lock brake control, an initial load can be imparted to the biasing member so that the piston moves in a direction away from the communication port against the elastic force of the biasing member.

In this configuration, when the brake hydraulic pressure within the brake fluid passage on the side of the pump has reached the operation start hydraulic pressure of the anti-lock brake control, the brake hydraulic pressure within the brake fluid passage on the side of the pump begins to be absorbed by the pump-side hydraulic pressure absorbing mechanism. Therefore, the pump-side hydraulic pressure absorbing mechanism can be made to efficiently absorb the brake hydraulic pressure within the fluid passage on the side of the pump in accordance with the operation start of the anti-lock brake control.

In the aforementioned brake hydraulic pressure control device for a handlebar vehicle, a master-cylinder-side hydraulic pressure absorbing mechanism which absorbs the brake hydraulic pressure within a brake fluid passage on the side of the master cylinder when the brake hydraulic pressure within the brake fluid passage on the side of the master cylinder becomes equal to or greater than the operation start hydraulic pressure of the pressure reducing valve can be provided at the brake fluid passage closer to the master cylinder than the seating position of the valve body of the pressure reducing valve, a pump-side hydraulic pressure absorbing mechanism which absorbs the brake hydraulic pressure within a brake fluid passage on the side of a pump when the brake hydraulic pressure within the brake fluid passage on the side of the pump becomes equal to or greater than the operation start hydraulic pressure of anti-lock brake control can be provided at a brake fluid passage which connects the seating position of the valve body of the pressure reducing valve and the discharge side of the pump provided at the base. It is also preferable that the master-cylinder-side hydraulic pressure absorbing mechanism and the pump-side hydraulic pressure absorbing mechanism be configured by parts with common structure.

By making parts constituting the master-cylinder-side hydraulic pressure absorbing mechanism and parts constituting the pump-side hydraulic pressure absorbing mechanism common, productivity or assemblability can be improved.

In the brake hydraulic pressure control device for a handlebar vehicle of the invention, the pressure reducing valve can be provided at the brake system without changing the internal structure of the base, and the rate of increase of the brake hydraulic pressure to be input to the base can be reduced with respect to the rate of increase of the brake hydraulic pressure generated in the master cylinder. Therefore, the stability of the brake control can be enhanced.

### BRIEF DESCRIPTION OF THE DRAWING

The present invention will become more fully understood from the detailed description given hereinbelow and the accompanying drawing which is given by way of illustration only, and thus is not limitative of the present invention and wherein:
Fig. 1 is a schematic view showing the overall configuration of a brake hydraulic pressure control device of a first embodiment;
Fig. 2 is a perspective view showing the brake hydraulic pressure control device of the first embodiment;
Figs. 3A and 3B are views showing a pressure reducing valve of the first embodiment, Fig. 3A is a cross-sectional view in a state where the valve is opened, and Fig. 3B is a cross-sectional view in a state where the valve is closed;
Fig. 4 is a graph showing the fluctuation state of the brake hydraulic pressure to be input to a base, in the brake hydraulic pressure control device of the first embodiment;
Fig. 5 is a cross-sectional view showing a pressure reducing valve and a hydraulic pressure absorbing mechanism of a brake hydraulic pressure control device of a second embodiment;

### DETAILED DESCRIPTION OF THE INVENTION

Next, embodiments of the invention will be described in detail appropriately referring to the drawings.

In addition, in the description of each embodiment, the same reference numerals will be given to the same elements, and duplicate description will be omitted.

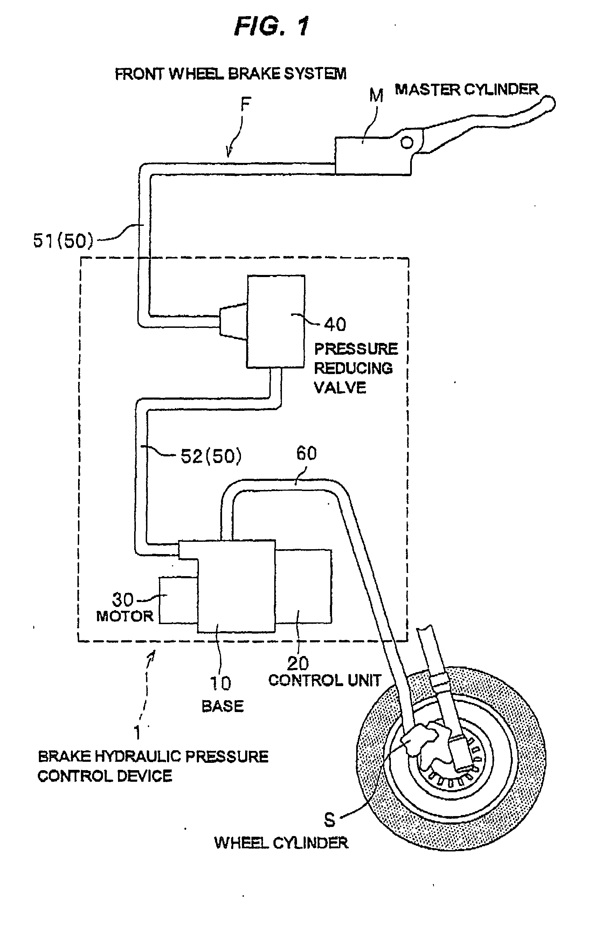

A brake hydraulic pressure control device 1 for a handlebar vehicle of a first embodiment, (hereinafter simply referred to as "brake hydraulic pressure control device"), as shown in Fig. 1, is one interposed between a master cylinder M and a wheel cylinder S of a wheel brake, and has a front wheel brake system F corresponding to a wheel cylinder S of a wheel brake of a front wheel, and a master cylinder M on the side of a front wheel which operates the wheel cylinder, and a rear wheel brake system (not shown) corresponding to the wheel cylinder of a wheel brake of a rear wheel, and a master cylinder on the side of a rear wheel which operates the wheel cylinder.

The brake hydraulic pressure control device 1 includes a base 10 into which electric components such as an electromagnetic valve or a pressure sensor, or a pump is assembled, a motor 30 assembled into the base 10, a control unit 20 which controls the opening and closing of the electromagnetic valve or the operation of the motor 30, and a pressure reducing valve 40 provided in the middle of a brake line 50 which connects the master cylinder M and the base 10 together.

In the brake hydraulic pressure control device 1, the control unit 20 operates the electromagnetic valve or the motor 30 on the basis of the information from a wheel speed sensor provided at a wheel, and appropriately controls the brake hydraulic pressure to be input to the wheel cylinder S of the wheel brake, thereby allowing anti-lock brake control of the wheel cylinder S.

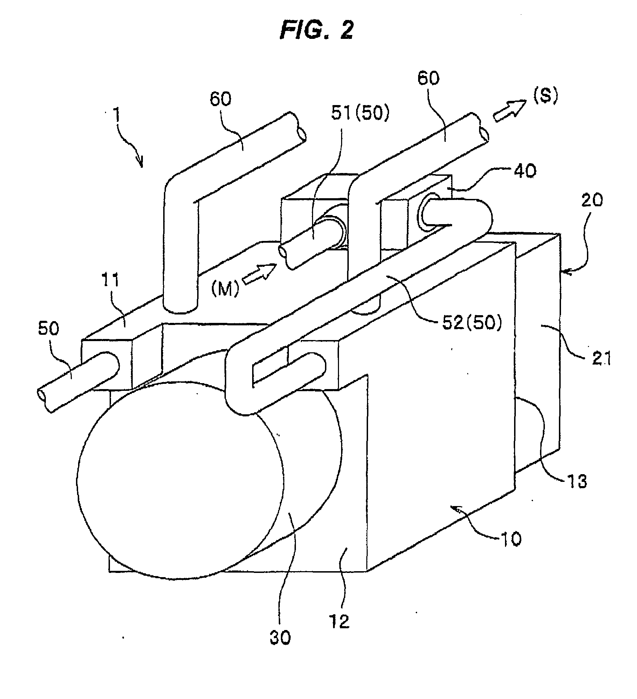

As shown in Fig. 2, the base 10 is a metal part formed substantially in a rectangular parallelepiped, and a brake fluid passage is formed inside the base.

A motor 30 which is a drive source of the pump is secured to a front face 12 of the base 10. Additionally, inlet ports are formed at the upper right and left corners of the front face 12, and brake lines 50 and 50 which lead to the master cylinder M are connected to the inlet ports, respectively. Additionally, a control unit 20 is secured to a rear face 13 of the base 10.

Outlet ports are formed at the front right and left portions of a top face 11 of a base 10, and brake lines 60 and 60 which lead to the wheel cylinder S are connected to the outlet ports, respectively. The brake line 60 extends in a vertical direction from the top face 11 of the base 10, and is then perpendicularly bent and thereby extends rearward (toward the control unit 20) along the top face 11.

The control unit 20 controls the opening and closing of the electromagnetic valve or the operation of the motor 30, on the basis of the information from the wheel speed sensor provided at the wheel, or a program which is stored in advance. The control unit 20 includes a housing 21 which is a box made of resin, and a control board received within the housing 21, and a front edge of the housing 21 is secured to the rear face 13 of the base 10.

Here, the anti-lock brake control in the brake hydraulic pressure control device 1 will be described taking the anti-lock brake control of the wheel cylinder S of the front wheel shown in Fig. 1 as an example.

First, when the control unit 20 determines that the brake hydraulic pressure to be input to the wheel cylinder S should be reduced, the control unit 20 operates the electromagnetic valve within the base 10 to allow the brake fluid to flow into a reservoir within the base 10, whereby the brake hydraulic pressure to be input to the wheel cylinder S is reduced.

First, when the control unit 20 determines that the brake hydraulic pressure to be input to the wheel cylinder S should be kept constant, the control unit 20 operates the electromagnetic valve within the base 10 to intercept a brake fluid passage which leads to the wheel cylinder S and a brake fluid passage which leads to the reservoir, and to trap the brake fluid within the base 10, whereby the brake hydraulic pressure to be input to the wheel cylinder 5 is kept constant.

Moreover, when the control unit 20 determines that the brake hydraulic pressure to be input to the wheel cylinder 5 should be increased, the control unit 20 operates the electromagnetic valve within the base 10 to open the brake fluid passage which leads to the wheel cylinder S and intercept the brake fluid passage which leads to the reservoir. Moreover, when the control unit operates the pump to allow the brake fluid within the reservoir to flow back to the brake fluid passage of the base 10 on the input side (master cylinder M side), the brake hydraulic pressure of the master cylinder M can be made to act on the wheel cylinder S. Thus, the brake hydraulic pressure to be input to the wheel cylinder S can be increased. That is, the brake hydraulic pressure to be input to the wheel cylinder S is increased on the basis of the differential pressure between the brake hydraulic pressure of the master cylinder M and the brake hydraulic pressure of the wheel cylinder S.

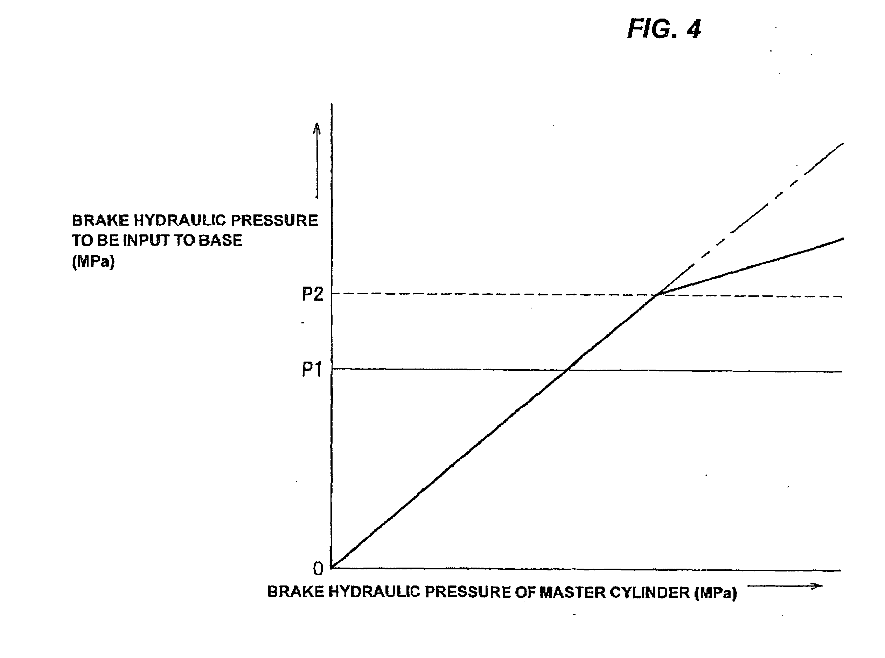

The pressure reducing valve 40, as shown in Fig. 1, is provided in the middle of the brake line 50 which leads to the base 10 from the master cylinder M, and reduces the rate of increase of the brake hydraulic pressure to be input to the base 10 with respect to the rate of increase of the brake hydraulic pressure generated in the master cylinder M when the brake hydraulic pressure generated in the master cylinder M becomes equal to or greater than a set hydraulic pressure P2 (refer to Fig. 4) set to be equal to or greater than an operation start hydraulic pressure P1 of the anti-lock brake control. In the present embodiment, the pressure reducing valve 40 is arranged in a dead space formed between the top face 11 of the base 10 and the brake line 60.

In addition, the operation start hydraulic pressure P1 shown in Fig. 4 is a brake hydraulic pressure with that a wheel may lock on a dry road surface or a rear wheel may lift. That is, the operation start hydraulic pressure is a brake hydraulic pressure which assumes that the anti-lock brake control is started by the control unit under dry road surface conditions. The concrete numerical value of this operation start hydraulic pressure P1 is appropriately set according to various kinds of vehicles.

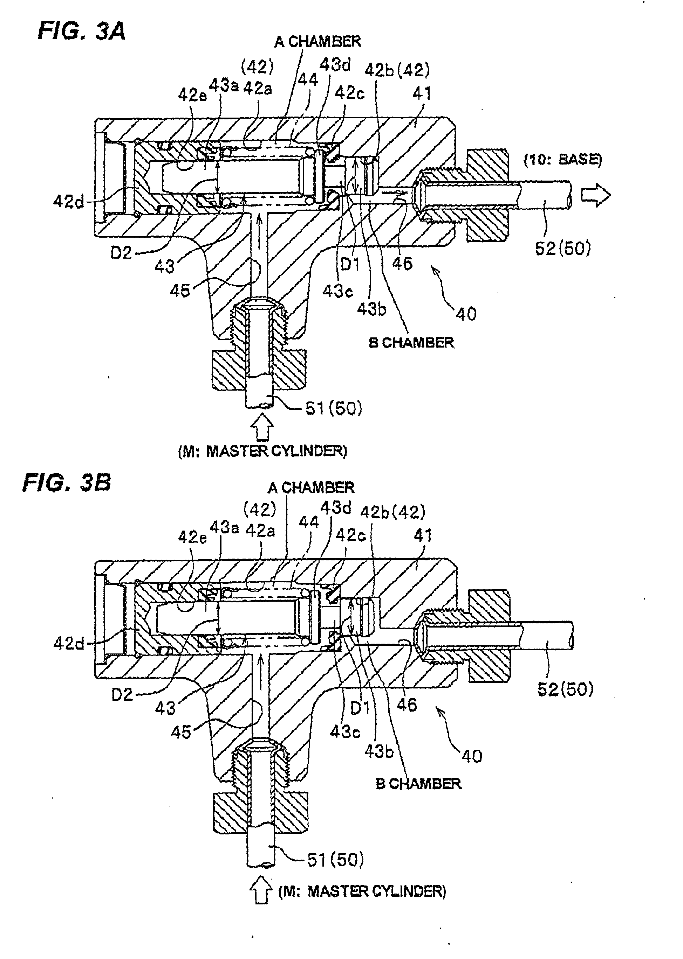

The pressure reducing valve 40, as shown in Fig. 3A, includes a housing 41 formed with a cylinder hole 42, a valve body 43 inserted into the cylinder hole 42, and a coil spring 44 housed within the cylinder hole 42, and operates according to the differential hydraulic pressure between the brake hydraulic pressure on the side of the master cylinder M and the brake hydraulic pressure on the side of the base 10.

The pressure reducing valve 40 is a proportioning valve (PCV) used in order to adjust the distribution of the brake hydraulic pressure which acts on a front wheel and a rear wheel. In the present embodiment, in order to prevent the brake hydraulic pressure being input to the base 10 from increasing, the pressure reducing valve 40 which is a proportioning valve is provided in the middle of the brake line 50 which leads to the base 10 from the master cylinder M.

The housing 41 is a metal part in which the cylinder hole 42 is formed. The cylinder hole 42 is a hole with a circular cross-section, and a larger diameter hole portion 42a and a smaller diameter hole portion 42b are formed.

The housing 41 is formed with a master-cylinder-side connection fluid passage 45 which leads to the larger diameter hole portion 42a from the external surface. The master-cylinder-side connection fluid passage 45 of the present embodiment is formed in a direction orthogonal to the axial direction of the cylinder hole 42.

Additionally, the housing 41 is formed with a base-side connecting fluid passage 46 which leads to the smaller diameter hole portion 42b from the external surface. The base-side connecting fluid passage 46 of the present embodiment is formed in the same direction as the axial direction of the cylinder hole 42.

An upstream line 51 of the brake line 50 which leads to the base to from the master cylinder M is connected to the master-cylinder-side connection fluid passage 45, and a downstream line 52 of the brake line 50 which leads to the base so from the master cylinder M is connected to the base-side connecting fluid passage 46.

An annular sheet member 42c is internally fitted to one end of the larger diameter hole portion 42a on the side of the smaller diameter hole portion 42b (the right of Fig. 3A). The sheet member 42c is a flexible elastic member, and is formed such that the internal diameter thereof is smaller than the smaller diameter hole portion 42b.

Additionally, a bottom member 42d is built in the other end (left end of Fig. 3A) of the larger diameter hole portion 42a. A central portion of the bottom member 42d is formed with a supporting hole 42e into which the valve body 43 which will be described later is slidably inserted.

The valve body 43 is a metal part with a circular cross-section which is received within the cylinder hole 42, and is formed with a larger diameter piston portion 43a received in the larger diameter hole portion 42a, a smaller diameter piston portion 43b received in the smaller diameter hole portion 42b, and a connecting piston portion 43C which connects the larger diameter piston portion 43a and the smaller diameter piston portion 43b together. The valve body 43 is adapted to be movable in the axial direction within the cylinder hole 42.

A flange portion 43d is formed at one end of the larger diameter piston portion 43a on the side of the smaller diameter piston portion 43b (the right of Fig. 3A). Additionally, the other end (left end of Fig. 3A) of the larger diameter piston portion 43a is slidably inserted into the supporting hole 42e of the bottom member 42d.

The smaller diameter piston portion 43b is inserted into the smaller diameter hole portion 42b. When the valve body 43 has moved to the side opposite to the smaller diameter hole portion 42b (the left of Fig. 3A), an outer peripheral edge of the smaller diameter piston portion 43b is brought into close contact with an opening edge of the sheet member. 42c (refer to Fig. 3B).

The connecting piston portion 43c is a part which connects the larger diameter piston portion 43a and the smaller diameter piston portion 43b together, and is inserted through the central portion of the sheet member 42c. A gap is formed between the outer peripheral surface of the connecting piston portion 43c and the inner peripheral surface of the sheet member 42c, and the larger diameter hole portion 42a and the smaller diameter hole portion 42b communicate with each other through this gap.

The coil spring 44 is surrounded by the larger diameter piston portion 43a of the valve body 43, and has one end abutting on the flange portion 43d of the larger diameter piston portion 43a and the other end abutting on the bottom member 42d, and the coil spring 44 is received in a compressed state within the cylinder hole 42.

The valve body 43 is biased toward the smaller diameter hole portion 42b (the right of Fig. 3A) by the coil spring 44, and is maintained in a state where the smaller diameter piston portion 43b is separated from the opening edge of the sheet member 42c, and abuts on the inner face of the smaller diameter hole portion 42b.

Additionally, when the brake hydraulic pressure which has acted on the flange portion 43d of the larger diameter piston portion 43a has reached the set hydraulic pressure P2 (refer to Fig. 4), an initial load is imparted to the coil spring 44 so that the valve body 43 moves toward the bottom member 42d against the elastic force of the coil spring 44.

In such a pressure reducing valve 40, the pressure-receiving area of the valve body 43 on the sides of the base-side connecting fluid passage 46 (hereinafter referred to as "B chamber side") is the area of a circle which has an effective seal diameter D1 of the smaller diameter piston portion 43b and the sheet member 42c as its diameter. Additionally, the pressure-receiving area of the valve body 43 on the side of the larger diameter hole portion 42a (hereinafter referred to as "A chamber side") is the area obtained by subtracting the cross-sectional area of the larger diameter piston portion 43a (diameter D2) from the area of a circle which has an effective seal diameter D1 as its diameter. Since the effective seal diameter D1 is made greater than the diameter D2 of the larger diameter piston portion 43a and D1>(D1-D2) is satisfied, the pressure-receiving area of the valve body 43 on the B chamber side is greater than that on the A chamber side.

When the pressure reducing valve 40 is not operated, the valve body 43 is biased toward the smaller diameter hole portion 42b by the spring force of the coil spring 44, and the smaller diameter piston portion 43b is brought into the state of being separated from the opening edge of the sheet member 42c. Therefore, the larger diameter hole portion 42a and the smaller diameter hole portion 42b communicate with each other, and the brake hydraulic pressure of the master-cylinder-side connection fluid passage 45 (A chamber) is transmitted also to the base-side connecting fluid passage 46 (B chamber). At this time, a pressing force acts on the valve body 43 toward the A chamber side from the B chamber side due to the difference in pressure-receiving area between the A chamber side and B chamber side of the valve body 43.

If the brake hydraulic pressure from the master cylinder M rises and the brake hydraulic pressure of the master-cylinder-side connection fluid passage 45 (B chamber side) reaches the set hydraulic pressure P2 (refer to Fig. 4), the pressing force which is acting on the valve body 43 from the B chamber side toward the A chamber side becomes greater than the biasing force of the coil spring 44, and as shown in Fig. 3B, the valve body 43 also moves toward the side (A chamber side) opposite to the smaller diameter hole portion 42b within the cylinder hole 42. Then, the outer peripheral edge of the smaller diameter piston portion 43b is brought into close contact with the opening edge of the sheet member 42c, and the larger diameter hole portion 42a and the smaller diameter hole portion 42b no longer communicate with each other, thereby resulting in a valve closed state.

If the brake hydraulic pressure of the master-cylinder-side connecting fluid passage continues being increased, the brake hydraulic pressure within the larger diameter hole portion 42a (A chamber) increases, but the brake hydraulic pressure within the base-side connecting fluid passage 46 (B chamber) is maintained. Therefore, the pressing force which acts on the valve body 43 toward the B chamber side from the A chamber side increases, and the valve body 43 is pushed out toward the smaller diameter hole portion 42b (B chamber side) within the cylinder hole 42. Thereby, as shown in Fig. 3A, the smaller diameter piston portion 43b is separated from the opening edge of the sheet member 42c, and the larger diameter hole portion 42a and the smaller diameter hole portion 42b communicate with each other, which results in a valve opened state, and the brake hydraulic pressure of the master-cylinder-side connection fluid passage 45 (A chamber side) and the brake hydraulic pressure of the base-side connecting fluid passage 46 (B chamber side) come to have the same hydraulic pressure.

Moreover, if the brake hydraulic pressure from the master cylinder M increases, as described above, due to the difference in pressure-receiving area between the A chamber side and B chamber side of the valve body 43, the pressing force directed to the A chamber side from the B chamber side becomes greater than the biasing force of the coil spring 44. A valve body 43 moves toward the A chamber side within the cylinder hole 42, and the valve is closed again. Thereafter, as the brake hydraulic pressure within the larger diameter hole portion 42a (A chamber) increases, the valve opening is repeated.

In this way, in the pressure reducing valve 40, the valve body 43 operate and their opening and closing are repeated, due to the differential hydraulic pressure between the brake hydraulic pressure on the side of the master cylinder M and the brake hydraulic pressure on the side of the base 10, so that the rate of increase of the brake hydraulic pressure to be input to the base 10 can be reduced with respect to the rate of increase of the brake hydraulic pressure generated in the master cylinder M (refer to Fig. 4).

The brake hydraulic pressure control device 1 of the first embodiment as described above operates as follows, and exhibits the working effects of the invention.

In the control unit 20 of the brake hydraulic pressure control device 1 shown in Fig. 1, if it is determined that the wheel has been locked on the basis of the information from the wheel speed sensor provided at the wheel, anti-lock brake control of the wheel cylinder S is started. At this time, it is assumed that the brake hydraulic pressure to be input to the base 10 from the master cylinder M has reached the operation start hydraulic pressure P1 (refer to Fig. 4).

When the brake hydraulic pressure to be input to the base 10 from the master cylinder M is smaller than the set hydraulic pressure P2 (refer to Fig. 4), the larger diameter hole portion 42a and the smaller diameter hole portion 42b of the cylinder hole 42 of the pressure reducing valve 40 shown in Fig. 3A are brought into communication with each other, the brake hydraulic pressure generated in the master cylinder M and the brake hydraulic pressure to be input to the base 10 come to have the same pressure.

Also, if excessive brake hydraulic pressure is generated in the master cylinder M due to the excessive input to a brake lever, and the brake hydraulic pressure generated in the master cylinder M reaches the set hydraulic pressure P2 (refer to Fig. 4), as shown in Fig. 3B, the pressing force which is acting on the valve body 43 of the pressure reducing valve 40 from the B chamber side toward the A chamber side becomes greater than the biasing force of the coil spring 44, the valve body 43 moves to the A chamber side within the cylinder hole 42, and the outer peripheral edge of the smaller diameter piston portion 43b is brought into close contact with the opening edge of the sheet member 42c. Thereby, the larger diameter hole portion 42a and the smaller diameter hole portion 42b no longer communicate with each other. Additionally, if the brake hydraulic pressure generated in the master cylinder M continues being increased, since the brake hydraulic pressure within the A chamber increases, and the brake hydraulic pressure within the B chamber is maintained, the pressing force which acts on the valve body 43 from the A chamber side toward the B chamber side increases, the valve body 43 is pushed out toward the B chamber side within the cylinder hole 42, and as shown in Fig. 3A, the smaller diameter piston portion 43b is brought into the state of being separated from the opening edge of the sheet member 42c, the larger diameter hole portion 42a and the smaller diameter hole portion 42b communicate with each other, the brake hydraulic pressure of the A chamber is transmitted also to the B chamber, and thereafter, valve opening and valve closing are repeated similarly.

In this way, as the pressure reducing valve 40 repeats its opening and closing due to the differential hydraulic pressure between the brake hydraulic pressure on the side of the master cylinder M and the brake hydraulic pressure on the side of the base 10, the rate of increase of the brake hydraulic pressure to be input to the base 10 is reduced with respect to the rate of increase of the brake hydraulic pressure generated in the master cylinder M (refer to Fig. 4).

In the brake hydraulic pressure control device 1 of the first embodiment, as shown in Fig. 1, the pressure reducing valve 40 is provided at the brake line 50 which connects the master cylinder M and the base 10 together, so that the degree of freedom in the layout of the pressure reducing valve 40 becomes high, and the pressure reducing valve 40 can be provided at the brake system without changing the internal structure of the base 10. Also, since the rate of increase of the brake hydraulic pressure to be input to the base 10 is reduced with respect to the rate of increase of the brake hydraulic pressure generated in the master cylinder M, the stability of the brake control can be enhanced.

Additionally, since the pressure reducing valve 40 is provided at the brake line 50 of the front wheel brake system F, and the front wheel brake system F and a rear wheel brake system are individually controlled, the accuracy of the brake control can be enhanced.

Additionally, in the brake hydraulic pressure control device 1 of the first embodiment, as shown in Fig. 3, the mechanical pressure reducing valve 40 in which the valve body 43 operates due to brake hydraulic pressure is used and it is not necessary to control the pressure reducing valve 40 electrically. Therefore, the brake control can be simplified.

Additionally, since electric connection of the pressure reducing valve 40 with the control unit 20 becomes unnecessary, the degree of freedom in the layout of the pressure reducing valve 40 increases, as shown in Fig. 2, the pressure reducing valve 40 can be arranged external to the base 10, and the base 10 can be miniaturized. Moreover, the space inside a vehicle can be effectively utilized by arranging the pressure reducing valve 40 in the dead space formed between the top face 11 of the base 10 and the brake line 60.

Although the first embodiment of the invention has been described hitherto, the invention is not limited to the above first embodiment, and can be appropriately changed without departing from the scope of the invention.

For example, in the first embodiment, as shown in Fig. 2, the pressure reducing valve 40 is arranged near the top face 11 of a base 10. However, the arrangement of the pressure reducing valve 40 is not limited, and the pressure reducing valve 40 can also be arranged near the master cylinder M, and can be arranged utilizing the space inside a vehicle effectively.

Additionally, in the first embodiment, as shown in Fig. 1, the pressure reducing valve 40 is provided only at the front wheel brake system F corresponding to the wheel cylinder S of a front wheel. However, the pressure reducing valve can also be provided at a rear wheel brake system corresponding to the wheel cylinder of a rear wheel, and the pressure reducing valve 40 can be provided at both the front wheel brake system F and the rear wheel brake system.

Additionally, in the first embodiment, a pressure reducing valve 40 is used in which the rate of increase of the brake hydraulic pressure to be input to the base 10 is reduced with respect to the rate of increase of the brake hydraulic pressure generated in the master cylinder M as the pressure reducing valve 40 repeats its opening and closing. However, when the brake hydraulic pressure generated in the master cylinder M is equal to or greater than the set hydraulic pressure P2 (refer to Fig. 4), the pressure reducing valve may be configured so that the valve closed state of a pressure reducing valve is maintained. In this case, the rate of increase of the brake hydraulic pressure to be input to the base 10 becomes zero with respect to the rate of increase of the brake hydraulic pressure generated in the master cylinder M.

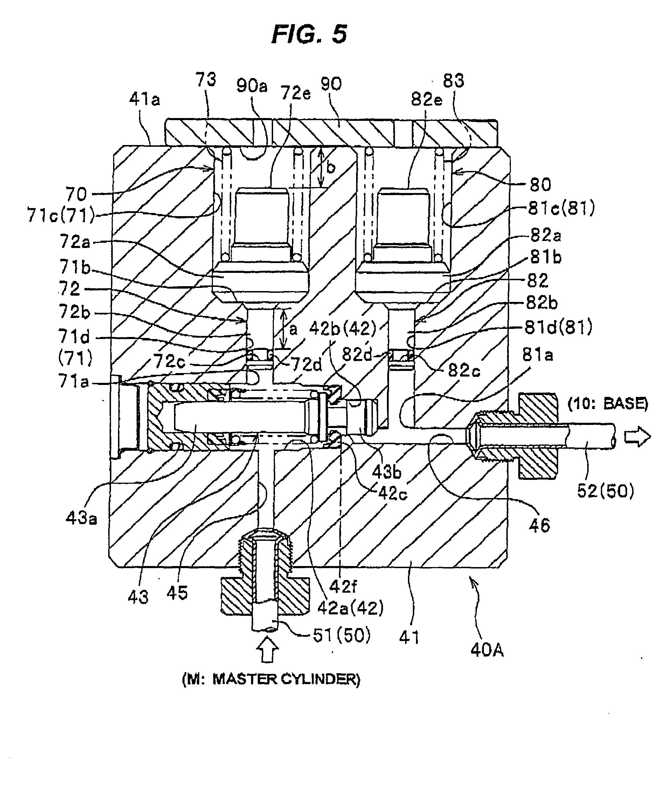

Next, a brake hydraulic pressure control device of a second embodiment of the invention will be described. The brake hydraulic pressure control device of the second embodiment, as shown in Fig. 5, is different from the brake hydraulic pressure control device (refer to Fig. 1) of the first embodiment in that a master-cylinder-side hydraulic pressure absorbing mechanism 70 and a pump-side hydraulic pressure absorbing mechanism 80 are provided within a housing 41 of a pressure reducing valve 40A.

The master-cylinder-side hydraulic pressure absorbing mechanism 70 includes a mounting hole 71 formed with a communication port 71a which leads to the larger diameter hole portion 42a of the cylinder hole 42, a piston 72 inserted into the mounting hole 71, and a coil spring 73 which biases the piston 72 toward the communication port 71a.

The mounting hole 71 is a hole with a circular cross-section bored in one face 41a of the housing 41 of the pressure reducing valve 40A, and has one end communicating with the larger diameter hole portion 42a of the cylinder hole 42 and the other end blocked by a platelike lid member 90 attached to the one face 41a of the housing 41. A smaller diameter hole portion 71d is formed closer to the cylinder hole 42 than an intermediate portion in the axial direction of the mounting hole 71, and a larger diameter hole portion 71c is formed on the side of the one face 41a of the housing 41. One end of the smaller diameter hole portion 71d opens to a central portion of a bottom face 71b of the larger diameter hole portion 71c.

The smaller diameter hole portion 71d of the mounting hole 71 is formed with the communication port 71a which leads to the larger diameter hole portion 42a of the cylinder hole 42. The communication port 71a leads to the master-cylinder-side connection fluid passage 45 via the larger diameter hole portion 42a of the cylinder hole 42.

The piston 72 is a metal member with a circular cross-section which is inserted into the mounting hole 71, and is formed with a larger diameter piston portion 72a received in the larger diameter hole portion 71, and a smaller diameter piston portion 72b received in the smaller diameter hole portion 71d. The piston 72 is adapted to be slidable in the axial direction within the mounting hole 71.

Additionally, a seal groove 72c is formed at the outer peripheral surface of a lower portion of the smaller diameter piston portion 72b over its whole periphery. A seal member 72d is fitted into the seal groove 72c, and the gap between the outer peripheral surface of the smaller diameter piston portion 72b and the inner peripheral surface of the smaller diameter hole portion 71d is liquid-tightly sealed by the seal member 72d.

In addition, the seal groove 72c of the smaller diameter piston portion 72b is formed at a position where the seal groove is not exposed to the larger diameter hole portion 71c when the piston 72 has moved toward the lid member 90 and a tip face 72e of the larger diameter piston portion 72a has abutted on an inner face 90a of the lid member 90. That is, the distance a from the seal groove 72c in the smaller diameter piston portion 72b to the larger diameter piston portion 72a is made greater than the distance b (the maximum stroke amount of the piston 72) from the tip face 72e of the larger diameter piston portion 72a to the inner face 90a of the lid member 90 in a state where the larger diameter piston portion 72a has abutted on a bottom face 71b of the larger diameter hole portion 71c. Thereby, even when the piston 72 has moved furthest toward the lid member °0, the seal member 72d fitted into the seal groove 72c of the smaller diameter piston portion 72b can be prevented from being exposed into the larger diameter hole portion 71c.

The coil spring 73 is an elastic member interposed in a compressed state between the piston 72 and the lid member 90, and has one end abutting on the larger diameter piston portion 72a of the piston 72 and the other end abutting on the inner face 90a of the lid member 90. The piston 72 is biased toward the communication port 71a (the lower side of Fig. 5) by the coil spring 73, and is maintained in a state where the larger diameter piston portion 72a has abutted on a bottom face 71b of the larger diameter hole portion 71c.

In the coil spring 73, an initial load is imparted to the coil spring 73 so that the piston 72 moves in a direction (the upper side of Fig. 5) away from the communication port 71a against the elastic force of the coil spring 73, when the brake hydraulic pressure within the master-cylinder-side connection fluid passage 45 which becomes a brake fluid passage closer to the master cylinder M than a seating position 42f of the valve body 43, and the larger diameter hole portion 42a has reached the operation start hydraulic pressure P2, i.e., set hydraulic pressure (refer to Fig. 4) of the pressure reducing valve 40A.

In addition, the seating position 42f of the valve body 43 of the pressure reducing valve 40A is a boundary position between the master cylinder M side and the base 10 side when the smaller diameter piston portion 43b of the valve body 43 is brought into close contact with the opening edge of the sheet member 42c.

The pump-side hydraulic pressure adsorbing mechanism 80 includes a mounting hole 81 formed with a communication port 81a which leads to the base-side connecting fluid passage 46, a piston 82 inserted into the mounting hole 81, and a coil spring 83 which biases a piston 82 toward the communication port 81a.

The mounting hole 81 of the pump-side hydraulic pressure absorbing mechanism 80 is a hole bored in the one face 41a of the housing 41 parallel to the mounting hole 71 of the master-cylinder-side hydraulic pressure absorbing mechanism 70, and is formed with a larger diameter hole portion 81c and a smaller diameter hole portion 81d, similarly to the mounting hole 71 of the master-cylinder-side hydraulic pressure absorbing mechanism 70. The mounting hole 81 of the pump-side hydraulic pressure absorbing mechanism 80 has the same shape as the mounting hole 71 of the master-cylinder-side hydraulic pressure absorbing mechanism 70 except that the smaller diameter hole portion 81d is greater than the smaller diameter hole portion 71d of the mounting hole 71 of the master-cylinder-side hydraulic pressure absorbing mechanism 70 in the axial direction.

The piston 82 of the pump-side hydraulic pressure absorbing mechanism 80 has the same shape as the piston 72 of the master-cylinder-side hydraulic pressure absorbing mechanism 70, and is configured using a part with the common structure. The piston 82 is formed with a larger diameter piston portion 82a and a smaller diameter piston portion 82b, and is adapted to be slidable in the axial direction within the mounting hole 81.

Additionally, similarly to the piston 72 of the master-cylinder-side hydraulic pressure absorbing mechanism, a seal member 82d is fitted into a seal groove 82c formed in the smaller diameter piston portion 82b of the piston 82 of the pump-side hydraulic pressure absorbing mechanism 80, and the gap between the outer peripheral surface of the smaller diameter piston portion 82b and the inner peripheral surface of the smaller diameter hole portion 81d is liquid-tightly sealed by the seal member. 82d. In addition, the seal groove 82c of the smaller diameter piston portion 82b is formed at a position where the seal groove is not exposed into the larger diameter hole portion 81c even when the piston 82 has moved toward the lid member 90 and a tip face 82e of the larger diameter piston portion 82a abuts on an inner face 90a of the lid member 90.

The coil spring 83 of the pump-side hydraulic pressure absorbing mechanism 80 is an elastic member interposed in a compressed state between the piston 82 and the lid member 90, and has one end abutting on the larger diameter piston portion 82a and the other end abutting on the inner face 90a of the lid member 90. The piston 82 is biased toward the communication port 81a (the lower side of Fig. 5) by the coil spring 83, and is maintained in a state where the larger diameter piston portion 82a abuts on a bottom face 81b of the larger diameter hole portion 81c.

In the coil spring 83, an initial load is imparted to the coil spring 83 so that the piston 82 moves in a direction (the upper side of Fig. 5) away from the communication port 81a against the elastic force of the coil spring 83, when the brake hydraulic pressure within the base-side connection fluid passage 46 which becomes a brake fluid passage which connects the seating position 42f of the valve body 43 and the discharge side of the pump provided at the base 10 has reached the operation start hydraulic pressure P1 (refer to Fig. 4) of the anti-lock brake control.

The brake hydraulic pressure control device of the second embodiment as described operates as follows, and exhibits the working effects of the invention.

When the brake hydraulic pressure within the base-side connecting fluid passage 46 has reached the operation start hydraulic pressure P1 (refer to Fig. 4) of the anti-lock brake control, the anti-lock brake control is started, the brake hydraulic pressure to be input to the wheel cylinder is reduced by the pressure-reducing control of the anti-lock brake control, and the brake fluid is reserved in the reservoir. When the brake fluid within the reservoir flows back to the brake fluid passage on the input side of the base by the pump, the piston 82 moves in a direction away from the communication port 81a against the elastic force of the coil spring 83. Thereby, the pump-side hydraulic pressure absorbing mechanism 80 is made to absorb the pulsation of the brake fluid discharged from the pump.

Additionally, when the brake hydraulic pressure within the base-side connecting fluid passage 46 has reached the operation start hydraulic pressure P1 (refer to Fig. 4) of the anti-lock brake control, the brake hydraulic pressure within the base-side connecting fluid passage 46 begins to be absorbed by the pump-side hydraulic pressure absorbing mechanism 80. Therefore, the pump-side hydraulic pressure absorbing mechanism 80 can be made to efficiently absorb the brake hydraulic pressure within the base-side connecting fluid passage 46 in accordance with the operation start of the anti-lock brake control.

As the brake hydraulic pressure within the base-side connecting fluid passage 46 is absorbed by the pump-side hydraulic pressure absorbing mechanism 80 in this way, the rise in the brake hydraulic pressure is controlled on the input side of the base at the time of the operation of the anti-lock brake control. Accordingly, in the brake hydraulic pressure control device of the second embodiment, the brake fluid within the reservoir is easily made to flow back to the input side of the base 10. Therefore, the pump can be miniaturized.

Additionally, since the pump-side hydraulic pressure absorbing mechanism 80 operates when the brake hydraulic pressure within the base-side connecting fluid passage 46 becomes equal to or greater than the operation start hydraulic pressure P1 of the anti-lock brake control (refer to Fig. 4), the brake hydraulic pressure within the base-side connecting fluid passage 46 can be prevented from being absorbed by the pump-side hydraulic pressure absorbing mechanism 80 when the brake hydraulic pressure has not reached the operation start hydraulic pressure P1, such as at the time of normal brake operation.

In addition, preferably, the coil spring 83 of the pump-side hydraulic pressure absorbing mechanism 80 increases the fluid amount of the brake fluid which flows into the mounting hole 81 by increasing the stroke from the start of deflection.

Also, if excessive brake hydraulic pressure is generated in the master cylinder due to excessive input to the brake lever, and the brake hydraulic pressure within the master-cylinder-side connection fluid passage 45 reaches the set hydraulic pressure P2 (refer to Fig. 4), the valve body 43 of the pressure reducing valve 40A moves within the cylinder hole 42, and the operation of the pressure reducing valve 40A is started.

In the brake hydraulic pressure control device of the second embodiment, when the brake hydraulic pressure within the master-cylinder-side connection fluid passage 45 becomes equal to or greater than the operation start hydraulic pressure (set hydraulic pressure P2 shown in Fig. 4) of the pressure reducing valve 40A, the piston 72 moves in a direction away from the communication port 71a against the elastic force of the coil spring 73, whereby the brake hydraulic pressure within the master-cylinder-side connection fluid passage 45 is reduced. Thereby, a sudden increase in reaction force against the operation of the brake lever can be eased.

That is, when the pressure reducing valve 40A operates and the valve closing of the pressure reducing valve 40A is repeated, the reaction force against the operation of the brake lever increases due to the rise in the brake hydraulic pressure within the master-cylinder-side connection fluid passage 45 compared with when the pressure reducing valve 40A is not provided. However, in the brake hydraulic pressure control device of the second embodiment, a change in the operation feel of the brake lever caused by the operation of the pressure reducing valve 40A can be reduced, and a favorable operation feel can be obtained.

Additionally, the master-cylinder-side hydraulic pressure absorbing mechanism 70 operates when the brake hydraulic pressure within the master-cylinder-side connection fluid passage 45 becomes equal to or greater than the set hydraulic pressure P2 (refer to Fig. 4) which is the operation start hydraulic pressure of the pressure reducing valve 40A. Therefore, the brake hydraulic pressure within the master-cylinder-side connection fluid passage 45 can be prevented from being reduced more than necessary, at the time of the brake operation in which the pressure reducing valve 40A is not operating.

Additionally, in the brake hydraulic pressure control device of the second embodiment, the brake hydraulic pressure within the master-cylinder-side connection fluid passage 45 begins to be reduced when the brake hydraulic pressure within the master-cylinder-side connection fluid passage 45 reaches the operation start hydraulic pressure (set hydraulic pressure P2 shown in Fig. 4) of the pressure reducing valve 40A. Therefore, a favorable operation feel can be obtained without causing any unpleasant sensation from the operation feel of the brake lever at the time of the operation start of the pressure reducing valve 40A.

In addition, in the brake hydraulic pressure control device of the second embodiment, it is preferable to eliminate any unpleasant sensation from the operation feel of the conventional brake lever by setting the amount of variation (the amount of contraction) from the start of deflection of the coil spring 83 so that the reaction force against the operation of the brake lever is approximated to the operation reaction force when the pressure reducing valve 40A is not provided.

Additionally, in the brake hydraulic pressure control device of the second embodiment, it is preferable to improve productivity or assemblability by adopting a structure in which the pistons 72 and 82 and coil springs 73 and 83 of the master-cylinder-side hydraulic pressure absorbing mechanism 70 and the pump-side hydraulic pressure absorbing mechanism 80 are made common.

In addition, by changing the initial load to be imparted to the coil springs 73 and 83, respectively, of the master-cylinder-side hydraulic pressure absorbing mechanism 70 and the pump-side hydraulic pressure absorbing mechanism 80, the brake hydraulic pressures from which the master-cylinder-side hydraulic pressure absorbing mechanism 70 and the pump-side hydraulic pressure absorbing mechanism 80 begin to operate can be set, respectively.

Although the second embodiment of the invention has been described hitherto, the invention is not limited to the above second embodiment, and can be appropriately changed without departing from the scope of the invention.

For example, in the brake hydraulic pressure control device of the second embodiment, as shown in Fig. 5, both the master-cylinder-side hydraulic pressure absorbing mechanism 70 and the pump-side hydraulic pressure absorbing mechanism 80 are provided, but only one of them may be provided.

Additionally, in the second embodiment, the master-cylinder-side hydraulic pressure absorbing mechanism 70 and the pump-side hydraulic pressure absorbing mechanism 80 are provided within the housing 41 of the pressure reducing valve 40A. However, the master-cylinder-side hydraulic pressure absorbing mechanism 70 and the pump-side hydraulic pressure absorbing mechanism 80 may be separately configured in the pressure reducing valve 40A.

Additionally, in the second embodiment, the communication port 71a of the master-cylinder-side hydraulic pressure absorbing mechanism 70 leads to the master-cylinder-side connection fluid passage 45 via the cylinder hole 42. However, the master-cylinder-side hydraulic pressure absorbing mechanism 70 may be arranged so that the communication port 71a directly leads to the cylinder hole 42.

In addition, in the invention, the rate of increase of the brake hydraulic pressure to be input to the base 10 can also be reduced with respect to the rate of increase of the brake hydraulic pressure generated in the master cylinder M by electrically controlling an electromagnetic pressure reducing valve using the control unit.

## Claims

1. A brake hydraulic pressure control device (1) for a handlebar vehicle, configured to perform anti-lock brake control, the brake hydraulic pressure control device comprising:
a base (10) formed with brake fluid passages; and
a pressure reducing valve (40) to reduce the rate of increase of the brake hydraulic pressure to be input to the base with respect to the rate of increase of the brake hydraulic pressure generated in the master cylinder (M) as a valve body (43) operates due to the differential hydraulic pressure between the brake hydraulic pressure on the side of the master cylinder (M) and the brake hydraulic pressure on the side of the base (10), **characterised in that** the pressure reducing valve is provided at a brake line which connects a master cylinder and the base.

2. The brake hydraulic pressure control device according to Claim 1, further comprising:
a front wheel brake system corresponding to a wheel cylinder of a front wheel; and
a rear wheel brake system corresponding to a wheel cylinder of a rear wheel, wherein
the pressure reducing valve is provided at the brake line which connects the master cylinder and the base together in at least one of the front wheel brake system and the rear wheel brake system from the base.

3. The brake hydraulic pressure control device according to Claim 1 or 2, wherein
the pressure reducing valve is arranged in a space formed between one face of the base, and a brake line extending along the one face of the base.

4. A brake hydraulic pressure control device (1) for a handlebar vehicle including a front wheel brake system (F) corresponding to a wheel cylinder of a front wheel, and a rear wheel brake system corresponding to a wheel cylinder of a rear wheel, the brake hydraulic pressure control device configured to perform anti-lock brake at least one of the front wheel brake system and the rear wheel brake system, the brake hydraulic pressure control device comprising:
a base formed with brake fluid passages (10); and
a pressure reducing valve (40) which reduces the rate of increase of the brake hydraulic pressure to be input to the base with respect to the rate of increase of the brake hydraulic pressure generated in the master cylinder (40),
the pressure reducing valve **characterised in that** is provided at the brake line, which connects the master cylinder and the base, in at least one of the front wheel brake system and the rear wheel brake system.

5. The brake hydraulic pressure control device according to any one of Claims 1 to 4, wherein:
a master-cylinder-side hydraulic pressure absorbing mechanism, which absorbs the brake hydraulic pressure within a brake fluid passage on the side of the master cylinder, is provided at the brake fluid passage closer to the master cylinder than a seating position of a valve body of the pressure reducing valve; and
the master-cylinder-side hydraulic pressure absorbing mechanism operates when the brake hydraulic pressure within the brake fluid passage on the side of the master cylinder becomes equal to or greater than the operation start hydraulic pressure of the pressure reducing valve.

6. The brake hydraulic pressure control device according to Claim 5, wherein:
the master-cylinder-side hydraulic pressure absorbing mechanism includes:
a mounting hole formed with a communication port which leads to the brake fluid passage on the side of the master cylinder;
a piston inserted into the mounting hole; and
a biasing member which biases the piston toward the communication port; and
when the brake hydraulic pressure within the brake fluid passage on the side of the master cylinder has reached the operation start hydraulic pressure of the pressure reducing valve, an initial load is imparted to the biasing member so that the piston moves in a direction away from the communication port against the elastic force of the biasing member.

7. The brake hydraulic pressure control device according to any one of Claims 1 to 6, wherein:
a pump-side hydraulic pressure absorbing mechanism, which absorbs the brake hydraulic pressure within a brake fluid passage on the side of a pump, is provided at a brake fluid passage which connects a seating position of a valve body of the pressure reducing valve and the discharge side of the pump provided at the base; and
the pump-side hydraulic pressure absorbing mechanism operates when the brake hydraulic pressure within the brake fluid passage on the side of the pump becomes equal to or greater than the operation start hydraulic pressure of the anti-lock brake control.

8. The brake hydraulic pressure control device according to Claim 7, wherein;
the pump-side hydraulic pressure absorbing mechanism includes:
a mounting hole formed with a communication port which leads to the brake fluid passage on the side of the pump;
a piston inserted into the mounting hole; and
a biasing member which biases the piston toward the communication port side; and
when the brake hydraulic pressure within the brake fluid passage on the side of the pump has reached the operation start hydraulic pressure of anti-lock brake control, an initial load is imparted to the biasing member so that the piston moves in a direction away from the communication port against the elastic force of the biasing member.

9. The brake hydraulic pressure control device according to any one of Claims 1 to 4, wherein:
a master-cylinder-side hydraulic pressure absorbing mechanism, which absorbs the brake hydraulic pressure within a brake fluid passage on the side of the master cylinder when the brake hydraulic pressure within the brake fluid passage on the side of the master cylinder becomes equal to or greater than the operation start hydraulic pressure of the pressure reducing valve, is provided at the brake fluid passage closer to the master cylinder than a seating position of a valve body of the pressure reducing valve;
a pump-side hydraulic pressure absorbing mechanism which absorbs the brake hydraulic pressure within a brake fluid passage on the side of a pump when the brake hydraulic pressure within the brake fluid passage on the side of the pump becomes equal to or greater than the operation start hydraulic pressure of anti-lock brake control is provided at a brake fluid passage which connects a seating position of a valve body of the pressure reducing valve and the discharge side of the pump provided at the base; and
the master-cylinder-side hydraulic pressure absorbing mechanism and the pump-side hydraulic pressure absorbing mechanism are configured by parts with a common structure.

10. The brake hydraulic pressure control device according to any one of Claims 4 to 9, wherein
the pressure reducing valve is arranged in a space formed between one face of the base, and a brake line extending along the one face of the base.

## Patentansprüche

1. Bremshydraulikdruck-Steuereinrichtung (1) für ein Lenkerfahrzeug, das eine Antiblockierbremssteuerung durchführen kann, wobei die Bremshydraulikdruck-Steuereinrichtung aufweist:
eine Basis (10), die mit Bremsfluiddurchgängen ausgebildet ist, und
ein Druckreduzierungsventil (40), um die Rate des Anstiegs des Bremshydraulikdrucks, der zur Basis einzugeben ist, bezüglich der Rate des Anstiegs des Bremshydraulikdrucks, der im Hauptzylinder (M) erzeugt wird, zu reduzieren, wenn ein Ventilkörper (43) aufgrund des Differenzhydraulikdrucks zwischen dem Bremshydraulikdruck an der Seite des Hauptzylinders (M) und dem Bremshydraulikdruck an der Seite der Basis arbeitet, **dadurch gekennzeichnet, dass** das Druckreduzierungsventil an einer Bremsleitung vorgesehen ist, die den Hauptzylinder und die Basis verbindet.

2. Bremshydraulikdruck-Steuereinrichtung gemäß Anspruch 1, ferner aufweisend:
ein Vorderradbremssystem, das einem Radzylinder eines Vorderrads entspricht, und
ein Hinterradbremssystem, das einem Radzylinder eines Hinterrads entspricht, wobei
das Druckreduzierungsventil an der Bremsleitung vorgesehen ist, die den Hauptzylinder und die Basis miteinander in zumindest entweder dem Vorderradbremssystem oder dem Hinterradbremssystem von der Basis verbindet.

3. Bremshydraulikdruck-Steuereinrichtung gemäß Anspruch 1 oder 2, bei der
das Druckreduzierungsventil in einem Raum angeordnet ist, der zwischen einer Fläche der Basis und einer sich entlang der einen Fläche der Basis erstreckenden Bremsleitung ausgebildet ist.

4. Bremshydraulikdruck-Steuereinrichtung (1) für ein Lenkerfahrzeug mit einem Vorderradbremssystem (F), das einem Radzylinder eines Vorderrads entspricht, und einem Hinterradbremssystem, das einem Radzylinder eines Hinterrads entspricht, wobei die Bremshydraulikdruck-Steuereinrichtung ein Antiblockierbremsen zumindest an entweder dem Vorderradbremssystem oder dem Hinterradbremssystem ausführen kann, wobei die Bremshydraulikdruck-Steuereinrichtung aufweist:
eine Basis, die mit Bremsfluiddurchgängen (10) ausgebildet ist, und
ein Druckreduzierungsventil (40), das die Rate des Anstiegs des Bremshydraulikdrucks, der zu der Basis einzugeben ist, bezüglich der Rate des Anstiegs des Bremshydraulikdrucks, der im Hauptzylinder erzeugt wird, reduziert, **dadurch gekennzeichnet, dass**
das Druckreduzierungsventil (40) an der Bremsleitung, die den Hauptzylinder und die Basis verbindet, in zumindest entweder dem Vorderradbremssystem oder dem Hinterradbremssystem vorgesehen ist.

5. Bremshydraulikdruck-Steuereinrichtung gemäß einem der Ansprüche 1 bis 4, bei dem:
ein hauptzylinderseitiger Hydraulikdruckabsorbierungsmechanismus, der den Bremshydraulikdruck innerhalb eines Bremsfluiddurchgangs an der Seite des Hauptzylinders absorbiert, am Bremsfluiddurchgang näher zum Hauptzylinder vorgesehen ist als eine Sitzposition eines Ventilkörpers des Druckreduzierungsventils, und
der hauptzylinderseitige Hydraulikdruckabsorbierungsmechanismus arbeitet, wenn der Bremshydraulikdruck innerhalb des Bremsfluiddurchgangs an der Seite des Hauptzylinders gleich oder größer als der Betriebsstarthydraulikdruck des Druckreduzierungsventils wird.

6. Bremshydraulikdruck-Steuereinrichtung gemäß Anspruch 5, bei der:
der hauptzylinderseitige Hydraulikdruckabsorbierungsmechanismus aufweist:
eine Befestigungsausnehmung, die mit einer Kommunikationsmündung ausgebildet ist, die zum Bremsfluiddurchgang an der Seite des Hauptzylinders führt,
einen in die Befestigungsausnehmung eingeführten Kolben, und
ein Spannbauteil, das den Kolben zur Kommunikationsmündung spannt, und
wenn der Bremshydraulikdruck innerhalb des Bremsfluiddurchgangs an der Seite des Hauptzylinders den Betriebsstarthydraulikdruck des Druckreduzierungsventils erreicht hat, wird eine Anfangslast zum Spannbauteil derart weitergegeben, dass sich der Kolben in Richtung weg von der Kommunikationsmündung gegen die elastische Kraft des Spannbauteils bewegt.

7. Bremshydraulikdruck-Steuereinrichtung gemäß einem der Ansprüche 1 bis 6, bei dem:
ein pumpenseitiger Hydraulikdruckabsorbierungsmechanismus, der den Bremshydraulikdruck innerhalb eines Bremsfluiddurchgangs an der Seite einer Pumpe absorbiert, an einem Bremsfluiddurchgang vorgesehen ist, der eine Sitzposition eines Ventilkörpers des Druckreduzierungsventils und die Ausstoßseite der an der Basis vorgesehenen Pumpe verbindet, und
der pumpenseitige Hydraulikdruckabsorbierungsmechanismus arbeitet, wenn der Bremshydraulikdruck innerhalb des Bremsfluiddurchgangs an der Seite der Pumpe gleich oder größer als der Betriebsstarthydraulikdruck der Antiblockierbremssteuerung wird.

8. Bremshydraulikdruck-Steuereinrichtung gemäß Anspruch 7, bei der:
der pumpenseitige Hydraulikdruckabsorbierungsmechanismus aufweist:
eine Befestigungsausnehmung, die mit einer Kommunikationsmündung ausgebildet ist, die zum Bremsfluiddurchgang an der Seite der Pumpe führt,
einen in die Befestigungsausnehmung eingeführten Kolben, und
ein Spannbauteil, das den Kolben zur Kommunikationsmündungsseite spannt, und
wenn der Bremshydraulikdruck innerhalb des Bremsfluiddurchgangs an der Seite der Pumpe den Betriebsstarthydraulikdruck der Antiblockierbremssteuerung erreicht hat, wird eine Anfangslast derart am Spannbauteil aufgebracht, dass sich der Kolben in einer Richtung weg von der Kommunikationsmündung gegen die elastische Kraft des Spannbauteils bewegt.

9. Bremshydraulikdruck-Steuereinrichtung gemäß einem der Ansprüche 1 bis 4, bei der:
ein hauptzylinderseitiger Hydraulikdruckabsorbierungsmechanismus, der den Bremshydraulikdruck innerhalb eines Bremsfluiddurchgangs an der Seite des Hauptzylinders absorbiert, wenn der Bremshydraulikdruck innerhalb des Bremsfluiddurchgangs an der Seite des Hauptzylinders gleich oder größer als der Betriebsstarthydraulikdruck des Druckreduzierungsventils wird, ist am Bremsfluiddurchgang näher zum Hauptzylinder vorgesehen als eine Sitzposition eines Ventilkörpers des Druckreduzierungsventils,
ein pumpenseitiger Hydraulikdruckabsorbierungsmechanismus, der den Bremshydraulikdruck innerhalb eines Bremsfluiddurchgangs an der Seite einer Pumpe absorbiert, wenn der Bremshydraulikdruck innerhalb des Bremsfluiddurchgangs an der Seite der Pumpe gleich oder größer als der Betriebsstarthydraulikdruck der Antiblockierbremssteuerung wird, ist an einem Bremsfluiddurchgang vorgesehen, der eine Sitzposition eines Ventilkörpers des Druckreduzierungsventils und die Ausstoßseite der an der Basis vorgesehenen Pumpe verbindet,
der hauptzylinderseitige Hydraulikdruckabsorbierungsmechanismus und der pumpenseitige Hydraulikdruckabsorbierungsmechanismus sind durch Teile mit einer gemeinsamen Struktur aufgebaut.

10. Bremshydraulikdruck-Steuereinrichtung gemäß einem der Ansprüche 4 bis 9, bei der
das Druckreduzierungsventil in einem Raum angeordnet ist, der zwischen einer Fläche der Basis und einer sich entlang der einen Fläche der Basis erstreckenden Bremsleitung ausgebildet ist.

## Revendications

1. Dispositif de commande de pression hydraulique de frein (1) pour un véhicule à guidon, configuré pour effectuer une commande de frein anti-verrou, le dispositif de commande de pression hydraulique de frein comprenant :
une base (10) formée avec des passages de liquide de freins ; et
un clapet réducteur de pression (40) pour réduire le taux d'augmentation de la pression hydraulique de frein devant être entrée dans la base par rapport au taux d'augmentation de la pression hydraulique de frein générée dans le maître-cylindre (M) comme un corps de vanne (43) fonctionne en raison de la pression hydraulique différentielle entre la pression hydraulique de frein du côté du maître cylindre (M) et la pression hydraulique de frein du côté de la base, **caractérisé en ce que** le clapet réducteur de pression est disposé au niveau d'une conduite de frein qui relie un maître-cylindre et la base.

2. Dispositif de commande de pression hydraulique de frein selon la revendication 1, comprenant en outre :
un système de frein de roue avant correspondant à un cylindre de roue d'une roue avant ; et
un système de frein de roue arrière correspondant à un cylindre de roue d'une roue arrière, dans lequel
le clapet réducteur de pression est disposé au niveau de la conduite de frein qui relie le maître-cylindre et la base ensemble dans au moins un du système de frein de roue avant et du système de frein de roue arrière à partir de la base.

3. Dispositif de commande de pression hydraulique de frein selon la revendication 1 ou 2, dans lequel
le clapet réducteur de pression est agencé dans un espace formé entre une face de la base et une conduite de frein s'étendant le long d'une face de la base.

4. Dispositif de commande de pression hydraulique de frein (1) pour un véhicule à guidon incluant un système de frein de roue avant (F) correspondant à un cylindre de roue d'une roue avant et un système de frein de roue arrière correspondant à un cylindre de roue d'une roue arrière, le dispositif de commande de pression hydraulique de frein étant configuré pour effectuer un frein anti-verrou sur au moins un du système de frein de roue avant et du système de frein de roue arrière, le dispositif de commande de pression hydraulique de frein comprenant :
une base formée avec des passages de liquide de freins (10) ; et
un clapet réducteur de pression (40) qui réduit le taux d'augmentation de la pression hydraulique de frein devant être entrée dans la base par rapport au taux d'augmentation de la pression hydraulique de frein générée dans le maître-cylindre, **caractérisé en ce que**
le clapet réducteur de pression (40) est disposé au niveau de la conduite de frein qui relie le maître cylindre et la base, dans au moins un du système de frein de roue avant et du système de frein de roue arrière.

5. Dispositif de commande de pression hydraulique de frein selon l'une quelconque des revendications 1 à 4, dans lequel :
un mécanisme d'absorption de pression hydraulique côté maître cylindre, qui absorbe la pression hydraulique de frein à l'intérieur d'un passage de liquide de freins du côté du maître-cylindre, est disposé au niveau du passage de liquide de freins plus près du maître-cylindre qu'une position de siège d'un corps de vanne du clapet réducteur de pression ; et
le mécanisme d'absorption de pression hydraulique côté maître cylindre fonctionne lorsque la pression hydraulique de frein à l'intérieur du passage de liquide de freins du côté du maître cylindre devient égale ou supérieure à la pression hydraulique de début de fonctionnement du clapet réducteur de pression.

6. Dispositif de commande de pression hydraulique de frein selon la revendication 5, dans lequel :
le mécanisme d'absorption de pression hydraulique côté maître cylindre inclut :
un trou de montage formé avec un orifice de communication qui mène au passage de liquide de freins du côté du maître cylindre ;
un piston inséré dans le trou de montage ; et
un élément de sollicitation qui sollicite le piston vers l'orifice de communication ; et
lorsque la pression hydraulique de frein à l'intérieur du passage de liquide de freins du côté du maître cylindre a atteint la pression hydraulique de début de fonctionnement du clapet réducteur de pression, une charge initiale est communiquée à l'élément de sollicitation de sorte que le piston se déplace dans une direction s'écartant de l'orifice de communication contre la force élastique de l'élément de sollicitation.

7. Dispositif de commande de pression hydraulique de frein selon l'une quelconque des revendications 1 à 6, dans lequel :
un mécanisme d'absorption de pression hydraulique côté pompe, qui absorbe la pression hydraulique de frein à l'intérieur d'un passage de liquide de freins du côté d'une pompe, est disposé au niveau d'un passage de liquide de freins qui relie une position de siège d'un corps de vanne du clapet réducteur de pression et le côté refoulement de la pompe disposée au niveau de la base ; et
le mécanisme d'absorption de pression hydraulique côté pompe fonctionne lorsque la pression hydraulique de frein à l'intérieur du passage de liquide de freins du côté de la pompe devient égale ou supérieure à la pression hydraulique de début de fonctionnement de la commande de frein anti-verrou.

8. Dispositif de commande de pression hydraulique de frein selon la revendication 7, dans lequel :
le mécanisme d'absorption de pression hydraulique côté pompe inclut :
un trou de montage formé avec un orifice de communication qui mène au passage de liquide de freins du côté de la pompe ;
un piston inséré dans le trou de montage ; et
un élément de sollicitation qui sollicite le piston vers le côté orifice de communication ; et
lorsque la pression hydraulique de frein à l'intérieur du passage de liquide de freins du côté de la pompe a atteint la pression hydraulique de début de fonctionnement de commande de frein anti-verrou, une charge initiale est communiquée à l'élément de sollicitation de sorte que le piston se déplace dans une direction s'écartant de l'orifice de communication contre la force élastique de l'élément de sollicitation.

9. Dispositif de commande de pression hydraulique de frein selon l'une quelconque des revendications 1 à 4, dans lequel :
un mécanisme d'absorption de pression hydraulique côté maître cylindre, qui absorbe la pression hydraulique de frein à l'intérieur d'un passage de liquide de freins du côté du maître cylindre lorsque la pression hydraulique de frein à l'intérieur du passage de liquide de freins du côté du maître cylindre devient égale ou supérieure à la pression hydraulique de début de fonctionnement du clapet réducteur de pression, est disposé au niveau du passage de liquide de freins plus près du maître-cylindre qu'une position de siège d'un corps de vanne du clapet réducteur de pression ;
un mécanisme d'absorption de pression hydraulique côté pompe qui absorbe la pression hydraulique de frein à l'intérieur d'un passage de liquide de freins du côté d'une pompe lorsque la pression hydraulique de frein à l'intérieur du passage de liquide de freins du côté de la pompe devient égale ou supérieure à la pression hydraulique de début de fonctionnement de commande de frein anti-verrou, est disposé au niveau d'un passage de liquide de freins qui relie une position de siège d'un corps de vanne du clapet réducteur de pression et le côté refoulement de la pompe disposée au niveau de la base ; et
le mécanisme d'absorption de pression hydraulique côté maître cylindre et le mécanisme d'absorption de pression hydraulique côté pompe sont configurés par des éléments avec une structure commune.

10. Dispositif de commande de pression hydraulique de frein selon l'une quelconque des revendications 4 à 9, dans lequel
le clapet réducteur de pression est agencé dans un espace formé entre une face de la base et une conduite de frein s'étendant le long d'une face de la base.
